# EUROPEAN PATENT SPECIFICATION

(11) **EP 4 353 187 B1**
(45) Date of publication and mention of the grant of the patent: **09.07.2025**
(21) Application number: 23202912.4
(22) Date of filing: 11.10.2023
(51) Int. Cl.: A61C 1/08, A61C 8/00

(54) **SURGICAL TEMPLATE FOR ORTHODONTIC OR DENTAL IMPLANTS**
CHIRURGISCHE SCHABLONE FÜR KIEFERORTHOPÄDISCHE ODER ZAHNIMPLANTATE
GABARIT CHIRURGICAL POUR IMPLANTS ORTHODONTIQUES OU DENTAIRES

(30) Priority: 11.10.2022 IT 202200020961
(43) Date of publication of application: 17.04.2024
(73) Proprietor: Orteam S.p.A. a socio unico, 20125 Milano (IT)
(72) Inventor: FEDERICI CANOVA, Fabio, 46019 Viadana (MN) (IT); DERTON, Nicola, 32043 Cortina (IT)
(74) Representative: De Bortoli, Tiziano

(56) References cited:
- CN-U- 207 202 952
- CN-U- 216 495 735
- CN-U- 216 854 897

## Description

The present invention generally falls within the field of oral implant surgery. In particular, the invention relates to a surgical template for placing orthodontic or dental implants.

In the field of oral implant surgery, computer-guided surgery methods are nowadays an increasingly popular choice for placing both dental implants, i.e., typically fixed implants intended to support artificial teeth, and orthodontic implants, i.e., temporary implants intended to fasten or provide anchor points for orthodontic treatment devices.

These methods are characterized by a preoperative planning step, carried out virtually using special software on the basis of the precise anatomy of a patient, previously acquired through three-dimensional radiographic investigations, and by a subsequent operative step, performed with the aid of surgical templates or guides especially created for the specific patient and the specific surgery on the basis of the virtual planning previously carried out. Compared with conventional implant surgery, the computer-guided approach makes it possible to plan and perform implant surgery with high precision and taking into account the actual and specific anatomy of each patient, thus improving the quality of results and reducing the invasiveness and duration of operations.

Surgical templates created and used in computer-guided implant surgery essentially consist of a shaped body that exactly reproduces the configuration of an oral cavity region of a patient where one or more implants are to be placed. One or more guiding openings are formed in the shaped body for inserting respective implants and corresponding placing tools. Each guiding opening, through its position in the template shaped body and its configuration, precisely defines the position of the respective implant in the oral cavity of the patient, as determined in the preoperative virtual planning step.

For example, EP 3461452 B1 discloses a surgical template for dental and/or orthodontic implants, particularly palatal implants, comprising a palatal portion reproducing the shape of the palate of a patient and at least one substantially cylindrical guide formed in the palatal portion. The guide has an axial passage having an inlet cylindrical length with an inlet section and an outlet length with an outlet section for inserting a corresponding implant into the palate of a patient with a predetermined inclination and depth.

In such a surgical template, each guiding opening defines, among other parameters, a single predetermined insertion direction for the respective implant. This feature can be a constraint, particularly in the case of implants for orthodontic purposes.

In fact, placing of orthodontic implants, and in particular so-called temporary anchoring devices (TAD) in the form of screws, mini-screws, or similar threaded elements intended to create anchor points for orthodontic devices, may be necessary at many different sites in the oral cavity of a patient. Some of these sites, because of their location and/or morphology, do not allow an implant to be placed directly according to an intended insertion direction, requiring instead to start placing the implant according to another direction and to change the direction while placing the implant to achieve the intended final insertion direction, by pivoting on the predetermined and fixed implant insertion point.

The same need may also sometimes arise in connection with the placement of dental implants, because of the particular type or shape of the implant.

In all cases, an orthodontic or dental implant placement requiring maneuvers to change the insertion direction is not compatible with surgical templates whose guiding openings define a single and predetermined insertion direction for the respective implant.

CN 216 495 735 U discloses an adjustable zygomatic alveolar ridge micro-implant implantation guide plate according to the preamble of claim 1.

In view of the above, it is an object of the present invention to provide an improved surgical template for placing orthodontic or dental implants which allows the insertion direction of an implant to be changed in a controlled and continuous manner during its placement.

According to the invention, this object is achieved by means of a surgical template for orthodontic or dental implants having the features set forth in appended claim 1. Preferred features of such a surgical template are the subject of the dependent claims.

In particular, the invention relates to a surgical template for placing orthodontic or dental implants, comprising a shaped body reproducing the shape of an oral cavity portion of a patient and at least one guiding opening formed in the shaped body for guiding an orthodontic or dental implant and/or a corresponding placing tool while placing the orthodontic or dental implant in a predetermined point of said oral cavity portion. The at least one guiding opening comprises a first guiding portion laterally delimited by a respective first guiding surface having a cylindrical development and defining a first guiding axis which extends through the at least one guiding opening, a second guiding portion laterally delimited by a second guiding surface having a cylindrical development and defining a respective second guiding axis which extends through the at least one guiding opening and crosses the first guiding axis, and a third guiding portion laterally delimited by a pair of mutually opposite guiding walls having a parallel course, which connects the first guiding portion and the second guiding portion with each other and is configured so as to guide a movement of the orthodontic or dental implant and/or of the corresponding placing tool between the first and the second guiding portions carried out by pivoting on an intersection point of said first and second guiding axes. The first guiding surface laterally delimiting the first guiding portion defines a first diameter, the second guiding surface laterally delimiting the second guiding portion defines a second diameter different from the first diameter, and the guiding walls laterally delimiting the third guiding portion have a distance from each other which is constant and equal to the smallest of said first and second diameters.

Advantageously, thanks to the special configuration of the at least one guiding opening, the surgical template of the invention allows placing in a guided manner and taking into account the specific anatomy of a patient even orthodontic or dental implants that, due to the position and/or morphology of the implant site, require changing the implant insertion direction while placing them.

In fact, the surgical template of the invention may be designed in such a way that the guiding axes defined at the first and second guiding portions of the at least one guiding opening correspond, respectively, to a predetermined initial insertion direction and a predetermined final insertion direction intended for the application of the orthodontic or dental implant, wherein the intersection point of said longitudinal axes corresponds to the fixed insertion point of the implant itself, and that the third guiding portion defines a predetermined guiding trajectory for the orthodontic or dental implant and/or its placing tool for passing from the first guiding portion to the second guiding portion of the guiding opening and, accordingly, from the initial insertion direction to the final insertion direction.

Moreover, the different diameters of the guiding surfaces defining the first and second guiding portion are advantageous for guiding with the same precision two different portions of the placing tool, such as for example a relatively wide engagement head and a thinner stem, which come in contact with the guiding opening while placing the orthodontic or dental implant.

By means of the surgical template of the invention it is therefore advantageously possible to extend the use of computer-guided operation techniques, along with the associated advantages in terms of precision, reliability, and less invasiveness, also to all cases in which placing an orthodontic or dental implant requires surgical maneuvers to change the insertion direction thereof.

Preferably, the guiding walls laterally delimiting the third guiding portions are defined by respective flat surfaces.

According to a preferred embodiment, the guiding walls laterally delimiting the third guiding portion are located, preferably symmetrically, on opposite sides of a plane defined by the first and second guiding axes.

In this case, the movement of the orthodontic or dental implant and/or the placing tool for passing from the first guiding portion to the second guiding portion of the at least one guiding opening occurs in a plane parallel to or coinciding with the plane defined by the first and second guiding axes. The corresponding movement performed by the surgeon during the insertion of the orthodontic or dental implant to change the insertion direction thereof is in this case particularly easy to perform and effective, as it takes place along a single direction in space and involves the shortest excursion length keeping the initial and final insertion directions the same.

Preferably, the first and second guiding axes form an angle between each other comprised between 10° and 95°, preferably between 30° and 80°.

Preferably, the shaped body forming the surgical template lacks metal parts and metal materials.

Conveniently, the shaped body is entirely made of a plastic material, in particular a resin suitable for dental use.

These features allow the surgical template to be made in a particularly simple way, through a single manufacturing process, e.g., an additive manufacturing process, with advantage in terms of manufacturing time and costs.

The surgical template of the invention has a preferred, although not exclusive, use for placing orthodontic implants, preferably, but not exclusively, TAD (Temporary Anchoring Device) screws or mini-screws, in regions of the oral cavity such as infra-zygomatic crests, mandibular buccal step, mandibular buccal shelf, portions of maxillary or mandibular intra-radicular alveolar bone, particularly within a computer-guided implant surgery method.

Further features and advantages of the invention will become more apparent from the following detailed description of a preferred embodiment thereof, made hereinafter, for indicating and non-limiting purposes, with reference to the drawings, in which:
- Fig. 1 is a schematic front perspective view of a surgical template according to the present invention;
- Fig. 2 is a schematic rear perspective view of the surgical template in Fig. 1;
- Fig. 3 is another schematic front perspective view of the surgical template in Fig. 1, in which guiding axes defined by the guiding opening of the surgical template are shown;
- Fig. 4 is a schematic cross-sectional view of the surgical template in Fig. 3 at a section plane defined by the guiding axes shown in Fig. 3, and
- Figs 5 and 6 are two schematic perspective views showing the use of the surgical template in Fig. 1 to place an orthodontic implant in the oral cavity of a patient.

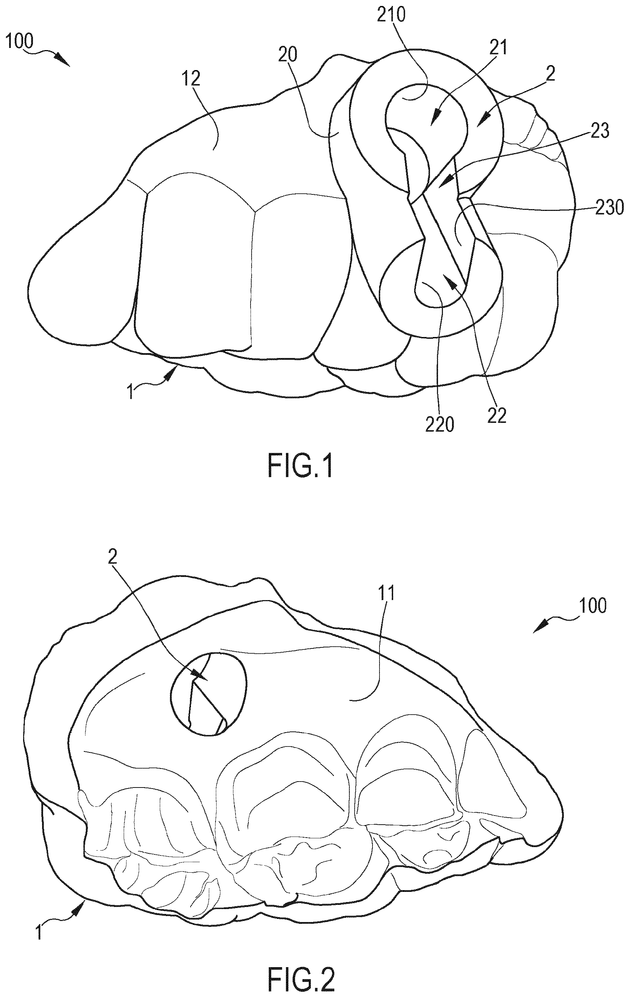

In Figs 1-4 a preferred embodiment of a surgical template for placing orthodontic implants according to the present invention is generally indicated with reference numeral 100.

The surgical template 100 essentially consists of a shaped body 1 reproducing the shape of an oral cavity portion of a patient at which an orthodontic implant is to be placed. In particular, the shaped body 1 comprises a portion delimited by a contact surface 11, visible in Fig. 2, which exactly reproduces, in negative, the morphology of the oral cavity portion in hand and contacts such oral cavity portion when the surgical template 100 is in use.

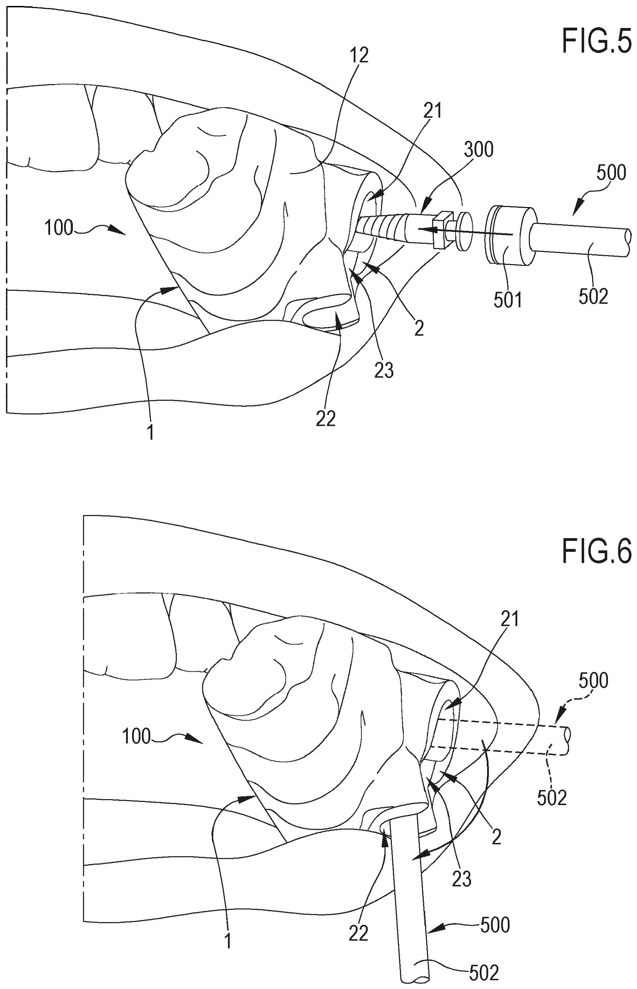

In the exemplary embodiment shown in the figures, the surgical template 100 is intended for placing an orthodontic implant 300 (see Fig. 5), in particular a TAD screw or mini-screw, at a left infra-zygomatic crest of a patient, as hereinafter described in more detail with reference to Figs. 5 and 6. Therefore, in this case the shaped body 1 reproduces an oral cavity portion of a patient at an outer back region of the upper left dental arch.

The shaped body 1 preferably has a monolithic structure and is preferably entirely made of plastic material, such as any known resin for dental use. In particular, the shaped body 1 is free of metal parts or inserts.

A guiding opening 2 positioned and configured to guide the insertion of the orthodontic implant 300 with the aid of a suitable placing tool 500 (see Figs. 5 and 6) at a predetermined insertion point of the oral cavity portion in hand, here the left infra-zygomatic crest, is formed in the shaped body 1.

The guiding opening 2 extends through the shaped body 1 between the contact surface 11 and a further surface 12, hereinafter referred to as exposed surface, of the shaped body 1, which is generically opposite the contact surface 11 and is intended to be exposed when the surgical template 100 is arranged in the oral cavity of the patient. The guiding opening 2 preferably ends flush with the contact surface 11, whereas, if necessary, it may extend beyond the exposed surface 12, as in the exemplary embodiment shown herein. In this case, part of the guiding opening 2 can be formed in a collar 20 projecting from the exposed surface 12. The end of the guiding opening 2 at the exposed surface 12 or at the distal end of the collar 20 represents an inlet end of the guiding opening 2, whereas the end of the guiding opening 2 at the contact surface 12 represents an outlet end of the guiding opening 2.

Overall, the guiding opening 2 has a generically flared shape, designed to allow an operator to change the insertion direction of the orthodontic implant while placing the same.

To this end, the guiding opening 2 comprises a first guiding portion 21 configured to guide the orthodontic implant 300 and the placing tool 500 axially along a predetermined initial insertion direction, a second guiding portion 22 configured to guide the orthodontic implant 300 and the placing tool 500 axially along a predetermined final insertion direction, and a third guiding portion 23 configured to guide the orthodontic implant 300 and the placing tool 500 along a predetermined trajectory during a movement from the initial insertion direction to the final insertion direction performed by pivoting on the predetermined fixed insertion point of the orthodontic implant 300. Said guiding portions 21, 22, 23 are configured to guide the orthodontic implant 300 and the placing tool 500 by direct contact with them. The guiding portions 21, 22, 23 conveniently have a continuous configuration. In particular, the guiding portions 21, 22, 23 are defined by respective walls lacking slots and through openings.

In more detail, the first guiding portion 21 of the guiding opening 2 is laterally delimited by a respective first guiding surface 210 having a cylindrical development, which defines a first guiding axis X1-X1 extending longitudinally along the guiding opening 2 and defining the predetermined initial insertion direction of the orthodontic implant 300.

The first guiding surface 210 also defines a first diameter d1, which in this case is substantially equal to the diameter of an engagement head 501 of the placing tool 500, through which the latter engages the orthodontic implant 300.

The intersection of the first guiding surface 210 and the contact surface 11 of the shaped body 1 defines the outlet end of the guiding opening 2. This end preferably has a circular shape with diameter d1.

The second guiding portion 22 of the guiding opening 2 is laterally delimited by a respective second guiding surface 220 having a cylindrical development, which defines a second guiding axis X2-X2 extending longitudinally along the guiding opening 2 and defining the predetermined final insertion direction of the orthodontic implant 300.

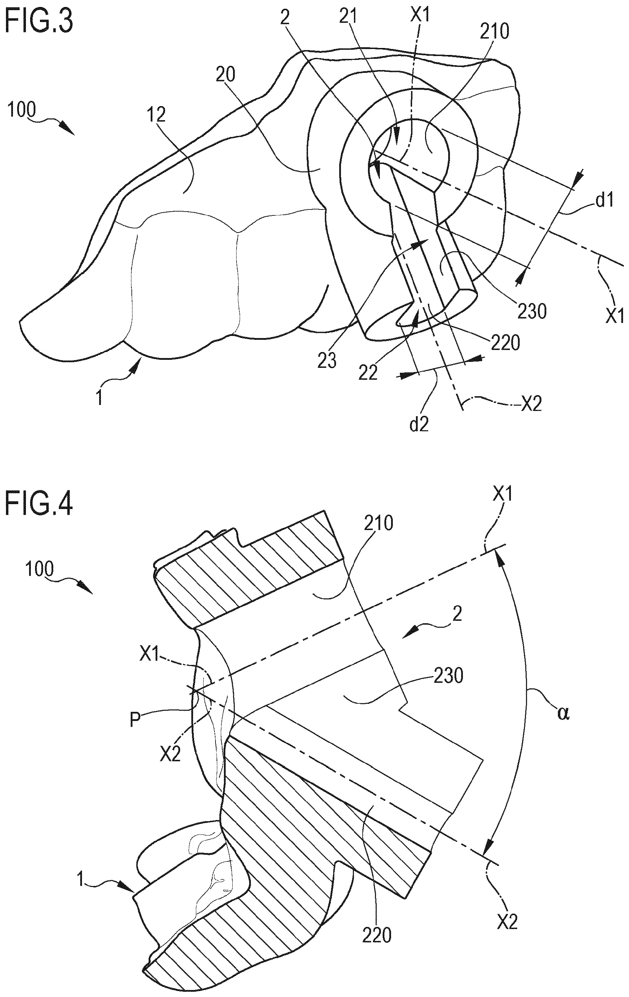

The second guiding axis X2-X2 is incident to the first guiding axis X1-X1, and the intersection point P between these axes, visible in Fig. 4, defines the predetermined insertion point of the orthodontic implant 300.

In the case of a surgical template 100 designed for the application of orthodontic implants at the infra-zygomatic crests, as in the example shown here, the first guiding axis X1-X1 and the second guiding axis X2-X2 form an angle α between each other preferably comprised between 30° and 80°. In general, the angle α between the first guiding axis X1-X1 and the second guiding axis X2-X2 may be comprised between 10° and 95°.

The second guiding surface 220 also defines a second diameter d2, which in this case is substantially equal to the diameter of a stem 502 of the placing tool 500.

The third guiding portion 23 of the guiding opening 2 is laterally delimited by a pair of mutually opposed guiding walls 230 having a parallel course, only one of which is visible in the views of Figs 1-6. Each of the guiding walls 230 joins the first guiding surface 210 of the first guiding portion 21 and the second guiding surface 220 of the second guiding portion 22.

In the preferred embodiment shown herein, the guiding walls 230 are defined by respective plane surfaces and are symmetrically arranged at opposite sides of a plane defined by guiding axes X1-X1 and X2-X2.

Moreover, the guiding walls 230 preferably have a mutual distance which is constant and preferably equal to the smallest between diameters d1, d2 respectively of the first and second guiding portions 21, 22, here diameter d2.

Therefore, in this case the third guiding portion 23 has a straight development, and the plane defined by guiding axes X1-X1 and X2-X2 forms a midplane of the third guiding portion 23 in which the movement of the orthodontic implant 300 and the placing tool 500 from the first guiding portion 21 to the second guiding portion 22 of the guiding opening 2 takes place.

The surgical template 100 can be advantageously used in oral implant surgery performed with a computer-guided approach. In this case, the surgical template 100 can be designed virtually during the preoperative planning step, based on the precise and specific anatomy of the patient. In particular, in the case of surgical template 100, besides the insertion point of the orthodontic implant, the most appropriate initial and final insertion directions for the implant itself are also precisely determined, i.e., the directions of the guiding axes X1-X1 and X2-X2 and their mutual inclination (angle α).

Figs 5 and 6 schematically show the placement of the orthodontic implant 300, in particular a TAD screw or mini-screw, at a predetermined point of the left infra-zygomatic crest of a patient using surgical template 100. The placement is carried out by means of a placing tool 500, in particular a suitable screw-driving tool, preferably manually operated, wherein only an end portion thereof, through which it engages the orthodontic implant 300, is shown in the figures.

The orthodontic implant 300 is initially inserted with the applicator tool 500 into the guiding opening 2 at the first guiding portion 21 (Fig. 5), whose guiding axis X1-X1 defines a predetermined initial insertion direction of the orthodontic implant 300.

Next, the orthodontic implant 300 is screwed a few turns in the initial insertion direction, so as to incise the gingival mucosa and partially penetrate the bone tissue at the predetermined insertion point (point P in Fig. 4). This is done in an axially guided manner due to the circumferential contact between the engagement head 501 of the placing tool 500 and the first guiding surface 210 that laterally delimits the first guiding portion 21.

At this point, the orthodontic implant 300 is again unscrewed a few turns without causing it to be detached from the insertion point, and, still by means of the placing tool 500, it is tilted in the guiding opening 2 until it reaches the second guiding portion 22, whose guiding axis X2-X2 defines a predetermined final insertion direction of the orthodontic implant 300 (Fig. 6). The tilting movement of the orthodontic implant 300 and the placing tool 500 is guided by the third guiding portion 23 of the guiding opening 2. In particular, during this movement the stem 502 of the placing tool 500 moves along and in contact with the guiding walls 230 of the third guiding portion 23.

At this point, the placement of the orthodontic implant 300 can be completed by screwing it in the final insertion direction to a predetermined depth in the bone tissue. This is also done in an axially guided manner thanks to the circumferential contact between the stem 502 of the placing tool 500 and the second guiding surface 220 laterally delimiting the second guiding portion 22.

A person skilled in the art can make changes and variations to the embodiment described above of the surgical template of the invention, in order to meet specific and contingent application needs, still falling within the scope of protection defined by the appended claims.

In particular, it is possible to configure the guiding opening 2 such that its three guiding portions have relative dimensions different from those described above, and it is conceivable to configure the third guiding portion 23 in such a way as to guide the movement of the orthodontic implant and/or a related placing tool between the first and second guiding portions 21, 22 even along a non-straight path.

It is also evident that the special features of the surgical template of the invention, particularly the configuration of the guiding opening, are independent of the shape of the shaped body of the template, which may vary according to the placement point intended for the orthodontic or dental implant, the type of orthodontic or dental implant, and/or the specific anatomy of the patient.

## Claims

1. Surgical template (100) for placing orthodontic or dental implants, comprising:
- a shaped body (1) reproducing the shape of an oral cavity portion of a patient, and
- at least one guiding opening (2) formed in the shaped body (1) for guiding an orthodontic or dental implant (300) and/or a corresponding placing tool (500) while placing the orthodontic or dental implant (300) in a predetermined point of said oral cavity portion,
wherein the at least one guiding opening (2) comprises:
- a first guiding portion (21) laterally delimited by a first guiding surface (210) having a cylindrical development and defining a first guiding axis (X1-X1) which extends through the at least one guiding opening (2);
- a second guiding portion (22) laterally delimited by a second guiding surface (220) having a cylindrical development and defining a second guiding axis (X2-X2) which extends through the at least one guiding opening (2) and crosses said first guiding axis (X1-X1), and
- a third guiding portion (23), which connects the first guiding portion (21) and the second guiding portion (22) with each other and is configured so as to guide a movement of the orthodontic or dental implant (300) and/or of the corresponding placing tool (500) between the first (21) and the second guiding portion (22) carried out by pivoting on an intersection point (P) of said first (X1-X1) and second guiding axes (X2-X2),
wherein the third guiding portion (23) is laterally delimited by a pair of mutually opposite guiding walls (230) having a parallel course,
**characterized in that** said first guiding surface (210) defines a first diameter (d1), said second guiding surface (220) defines a second diameter (d2) different from the first diameter (d1), and said guiding walls (230) have a distance from each other which is constant and equal to the smallest of said first (d1) and second diameters (d2).

2. Surgical template (100) according to claim 1, wherein said guiding walls (230) are defined by respective flat surfaces.

3. Surgical template (100) according to claim 1 or 2, wherein said guiding walls (230) are located on opposite sides of a plane defined by said first (X1-X1) and second guiding axes (X2-X2).

4. Surgical template (100) according to claim 3, wherein said guiding walls (230) are symmetrically located relative to the plane defined by said first (X1-X1) and second guiding axes (X2-X2).

5. Surgical template (100) according to any one of the previous claims, wherein said first (X1-X1) and second guiding axes (X2-X2) form an angle between each other comprised between 10° and 95°, preferably between 30° and 80°.

6. Surgical template (100) according to any one of the previous claims, wherein said shaped body (1) lacks metal parts and metal materials.

7. Surgical template (100) according to any one of the previous claims, wherein said oral cavity portion comprises an infra-zygomatic crest, a mandibular buccal step, a mandibular buccal shelf, or mandibular or maxillary interradicular alveolar bone portions.

8. Surgical template (100) according to any one of the previous claims, wherein said orthodontic or dental implant (300) is a TAD screw or mini-screw.

## Patentansprüche

1. Chirurgische Schablone (100) zum Einsetzen kieferorthopädischer oder dentaler Implantate, umfassend:
- einen Formkörper (1), der die Form eines Mundhöhlenabschnitts eines Patienten nachbildet, und
- mindestens eine in dem Formkörper (1) gebildete Führungsöffnung (2) zum Führen eines kieferorthopädischen oder dentalen Implantats (300) und/oder eines entsprechenden Einsetzungswerkzeugs (500) beim Einsetzen des kieferorthopädischen oder dentalen Implantats (300) an einer vorbestimmten Stelle des Mundhöhlenabschnitts,
wobei die mindestens eine Führungsöffnung (2) umfasst:
- einen ersten Führungsabschnitt (21), der seitlich durch eine erste Führungsoberfläche (210) begrenzt ist, die einen zylindrischen Aufbau aufweist und eine erste Führungsachse (X1-X1) definiert, die sich durch die mindestens eine Führungsöffnung (2) erstreckt;
- einen zweiten Führungsabschnitt (22), der seitlich durch eine zweite Führungsoberfläche (220) begrenzt ist, die einen zylindrischen Aufbau aufweist und eine zweite Führungsachse (X2-X2) definiert, die sich durch die mindestens eine Führungsöffnung (2) erstreckt und die erste Führungsachse (X1-X1) kreuzt, und
- einen dritten Führungsabschnitt (23), der den ersten Führungsabschnitt (21) und den zweiten Führungsabschnitt (22) miteinander verbindet und konfiguriert ist, eine Bewegung des kieferorthopädischen oder dentalen Implantats (300) und/oder des entsprechenden Einsetzungswerkzeugs (500) zwischen dem ersten (21) und dem zweiten Führungsabschnitt (22) zu führen, die durch Schwenken an einem Schnittpunkt (P) der ersten (X1-X1) und zweiten Führungsachse (X2-X2) ausgeführt wird,
wobei der dritte Führungsabschnitt (23) seitlich durch ein Paar einander gegenüberliegender Führungswände (230) mit einem parallelen Verlauf begrenzt ist,
**dadurch gekennzeichnet, dass** die erste Führungsoberfläche (210) einen ersten Durchmesser (d1) definiert, die zweite Führungsoberfläche (220) einen zweiten Durchmesser (d2) definiert, der sich von dem ersten Durchmesser (d1) unterscheidet, und die Führungswände (230) einen Abstand voneinander aufweisen, der konstant und gleich dem kleinsten des ersten (d1) und zweiten Durchmessers (d2) ist.

2. Chirurgische Schablone (100) nach Anspruch 1, wobei die Führungswände (230) durch jeweilige flache Oberflächen definiert sind.

3. Chirurgische Schablone (100) nach Anspruch 1 oder 2, wobei die Führungswände (230) auf gegenüberliegenden Seiten einer Ebene angeordnet sind, die durch die erste (X1-X1) und die zweite Führungsachse (X2-X2) definiert ist.

4. Chirurgische Schablone (100) nach Anspruch 3, wobei die Führungswände (230) relativ zu der durch die erste (X1-X1) und die zweite Führungsachse (X2-X2) definierte Ebene symmetrisch angeordnet sind.

5. Chirurgische Schablone (100) nach einem der vorstehenden Ansprüche, wobei die erste (X1-X1) und die zweite Führungsachse (X2-X2) untereinander einen Winkel zwischen 10° und 95°, vorzugsweise zwischen 30° und 80°, bilden.

6. Chirurgische Schablone (100) nach einem der vorstehenden Ansprüche, wobei dem Formkörper (1) Metallbehälter und Metallmaterialien fehlen.

7. Chirurgische Schablone (100) nach einem der vorstehenden Ansprüche, wobei der Mundhöhlenabschnitt eine infrazygomatische Leiste, eine Unterkiefer-Bukkalstufe, eine Unterkiefer-Bukkalplatte oder interradikuläre Alveolarknochenabschnitte im Unter- oder Oberkiefer umfasst.

8. Chirurgische Schablone (100) nach einem der vorstehenden Ansprüche, wobei das kieferorthopädische oder dentale Implantat (300) eine TAD-Schraube oder Minischraube ist.

## Revendications

1. Gabarit chirurgical (100) pour la pose d'implants orthodontiques ou dentaires, comprenant :
- un corps façonné (1) reproduisant la forme d'une partie de cavité buccale d'un patient, et
- au moins une ouverture de guidage (2) formée dans le corps façonné (1) pour guider un implant orthodontique ou dentaire (300) et/ou un outil de pose (500) correspondant lors de la pose de l'implant orthodontique ou dentaire (300) dans un point prédéterminé de ladite partie de cavité buccale,
dans lequel la au moins une ouverture de guidage (2) comprend :
- une première partie de guidage (21) délimitée latéralement par une première surface de guidage (210) présentant un développement cylindrique et définissant un premier axe de guidage (X1-X1) qui s'étend à travers la au moins une ouverture de guidage (2) ;
- une deuxième partie de guidage (22) délimitée latéralement par une seconde surface de guidage (220) présentant un développement cylindrique et définissant un second axe de guidage (X2-X2) qui s'étend à travers la au moins une ouverture de guidage (2) et croise ledit premier axe de guidage (X1-X1), et
- une troisième partie de guidage (23) qui relie la première partie de guidage (21) et la deuxième partie de guidage (22) l'une à l'autre et est configurée de manière à guider un mouvement de l'implant orthodontique ou dentaire (300) et/ou de l'outil de pose (500) correspondant entre la première partie de guidage (21) et la deuxième partie de guidage (22) réalisé par pivotement sur un point d'intersection (P) dudit premier axe de guidage (X1-X1) et dudit second axe de guidage (X2-X2),
dans lequel la troisième partie de guidage (23) est délimitée latéralement par une paire de parois de guidage mutuellement opposées (230) présentant une trajectoire parallèle,
**caractérisé en ce que** ladite première surface de guidage (210) définit un premier diamètre (d1), ladite seconde surface de guidage (220) définit un second diamètre (d2) différent du premier diamètre (d1), et lesdites parois de guidage (230) présentent une distance l'une de l'autre qui est constante et égale au plus petit dudit premier diamètre (d1) et dudit second diamètre (d2).

2. Gabarit chirurgical (100) selon la revendication 1, dans lequel lesdites parois de guidage (230) sont définies par des surfaces planes respectives.

3. Gabarit chirurgical (100) selon la revendication 1 ou 2, dans lequel lesdites parois de guidage (230) sont situées sur des côtés opposés d'un plan défini par ledit premier axe de guidage (X1-X1) et ledit second axe de guidage (X2-X2).

4. Gabarit chirurgical (100) selon la revendication 3, dans lequel lesdites parois de guidage (230) sont situées symétriquement par rapport au plan défini par ledit premier axe de guidage (X1-X1) et ledit second axe de guidage (X2-X2).

5. Gabarit chirurgical (100) selon l'une quelconque des revendications précédentes, dans lequel ledit premier axe de guidage (X1-X1) et ledit second axe de guidage (X2-X2) forment entre eux un angle compris entre 10° et 95°, de préférence entre 30° et 80°.

6. Gabarit chirurgical (100) selon l'une quelconque des revendications précédentes, dans lequel ledit corps façonné (1) est dépourvu de parties métalliques et de matériaux métalliques.

7. Gabarit chirurgical (100) selon l'une quelconque des revendications précédentes, dans lequel ladite partie de cavité buccale comprend une crête infra-zygomatique, une avancée buccale mandibulaire, un plateau buccal mandibulaire ou des parties osseuses alvéolaires interradiculaires mandibulaires ou maxillaires.

8. Gabarit chirurgical (100) selon l'une quelconque des revendications précédentes, dans lequel ledit implant orthodontique ou dentaire (300) est une vis ou une mini-vis TAD.
